# EUROPEAN PATENT APPLICATION

(11) **EP 2 471 353 A1**
(43) Date of publication of application: **04.07.2012**
(21) Application number: 10252250.5
(22) Date of filing: 30.12.2010
(51) Int. Cl.: A01G 1/00, A01C 14/00

(54) **A method of growing tobacco plants**

(71) Applicant: Philip Morris Products S.A., 2000 Neuchâtel (CH)
(72) Inventor: Marques, Antonio, 1822 Chernex (CH)
(74) Representative: Millburn, Julie Elizabeth

(57) **Abstract**

A method of growing tobacco in a tobacco field during a twelve month period comprises: successively transplanting tobacco seedlings into at least three different regions of the tobacco field at pre-determined intervals during the twelve month period; cultivating the tobacco seedlings in each of the at least three different regions of the tobacco field; and harvesting a tobacco crop from each of the at least three different regions of the tobacco field. The pre-determined intervals between successively transplanting tobacco seedlings into the at least three different regions of the tobacco field are such that tobacco seedlings are transplanted into a region of the tobacco field during harvesting of a tobacco crop from another region of the tobacco field.

## Description

The present invention relates to an improved method of growing tobacco.

Tobacco plants are conventionally grown by sowing tobacco seeds in seed beds to produce tobacco seedlings. The tobacco seedlings are then transplanted into a tobacco field where they are cultivated to produce mature tobacco plants. Standard agronomic practices may be applied to the tobacco crop during cultivation depending on the variety or type of tobacco grown and the geographic location of the tobacco field. The tobacco crop is harvested either by picking individual tobacco leaves from each mature tobacco plant as they ripen ('leaf priming') or by harvesting the entire tobacco plant ('stalk-cutting'). Depending upon the type of tobacco grown, the harvested tobacco leaves are then cured using different methods. The most notable curing methods include air-curing, fire-curing, flue-curing and sun-curing. The harvested tobacco leaves are then graded and further processed for use in the manufacture of smoking articles.

An average tobacco crop cycle typically lasts about eight months from sowing to harvesting. Due to seasonal variations in climatic conditions and the length of the tobacco crop cycle, tobacco is conventionally cultivated annually with only a single crop being grown per unit area of a tobacco field in each calendar year. This not only disadvantageously limits the overall tobacco yield, but also undesirably leads to peaks and troughs in the usage of the equipment, labour and other resources required during the various stages of the tobacco crop cycle.

It would be desirable to provide a method of growing tobacco in a tobacco field during a twelve month period that results in more consistent and efficient usage of equipment, labour and other resources compared to conventional methods of growing tobacco. It would also be desirable to provide a method of growing tobacco that enables the tobacco yield per unit area of a tobacco field per calendar year to be increased compared to conventional methods of growing tobacco.

According to the present invention, there is provided a method of growing tobacco in a tobacco field during a twelve month period, the method comprising: successively transplanting tobacco seedlings into at least three different regions of the tobacco field during the twelve month period at pre-determined intervals; cultivating the tobacco seedlings in each of the at least three different regions of the tobacco field; and harvesting a tobacco crop from each of the at least three different regions of the tobacco field. The pre-determined intervals between successively transplanting tobacco seedlings into the at least three different regions of the tobacco field are such that tobacco seedlings are transplanted into a region of the tobacco field during harvesting of a tobacco crop from another region of the tobacco field.

By transplanting tobacco seedlings into at least three different regions of a tobacco field at pre-determined intervals in accordance with the method of the invention, the various stages of the tobacco crop cycle are staggered or offset in both time and space over the total area of the tobacco field during the twelve month period. As described further below, this advantageously results in more consistent and efficient usage of equipment, labour and other resources compared to conventional methods of growing tobacco.

Furthermore, as also described further below, the method of the invention may advantageously be used to grow tobacco substantially continuously during a twelve month period. Growing tobacco substantially continuously in a tobacco field during a twelve month period in accordance with the method of the invention enables the tobacco yield per unit area of a tobacco field to be increased. The tobacco yield per unit area of a tobacco field can be advantageously increased by up to fifty percent or more compared to the tobacco yield per unit area obtained by conventional methods of growing tobacco.

Throughout the specification, the term 'tobacco field' is used to denote an area of land on which tobacco is farmed. The tobacco field may consist of a single continuous area of open land on which tobacco is farmed by a tobacco farmer. Alternatively, the tobacco field may comprise a plurality of separate neighbouring or nearby areas of open land within the same geographical area on which tobacco is farmed by a tobacco farmer.

Preferably, the total area of the tobacco field is at least about 100 hectares, more preferably at least about 250 hectares, most preferably at least about 500 hectares. The greater the total area of a tobacco field, the greater the improvement and advantages provided by the method of the invention compared to conventional methods of growing tobacco.

The at least three different regions of the tobacco field into which tobacco seedlings are successively transplanted in accordance with the present invention may be of the same or different size. Preferably, the area of each different region of the tobacco field into which tobacco seedlings are transplanted in accordance with the method of the invention is at least about 10 hectares, more preferably at least about 25 hectares, most preferably at least about 50 hectares.

It will be appreciated that the method of the invention may comprise successively transplanting tobacco seedlings into more than three different regions of a tobacco field during a twelve month period at pre-determined intervals. For example, the method of the invention may comprise transplanting tobacco seedlings into at least four different regions, at least six different, at least eight different regions, at least ten different regions or at least twelve different regions of a tobacco field during a twelve month period at pre-determined intervals.

Preferably, the method of the invention comprises successively transplanting tobacco seedlings into twelve or fewer different regions of a tobacco field during a twelve month period at pre-determined intervals.

The at least three different regions of the tobacco field into which tobacco seedlings are successively transplanted in accordance with the present invention may be contiguous or non-contiguous.

Tobacco fields in which tobacco is grown in accordance with the method of the invention may be physically sub-divided into at least three different regions of the tobacco field by fences, ditches, or other barriers or dividers. Alternatively, the at least three different regions of tobacco fields in which tobacco is grown in accordance with the method of the invention may form part of one continuous area.

The pre-determined intervals at which tobacco seedlings are successively transplanted into at least three different regions of a tobacco field in accordance with the method of the invention may be selected based upon a number of factors including, but not limited to: the variety of tobacco grown; the number of different regions of the tobacco field into which tobacco seedlings are transplanted during the twelve month period; the area of the different regions of the tobacco field into which the tobacco seedlings are transplanted; and the capacity of existing equipment and facilities.

For example, the method of the invention may comprise transplanting tobacco seedlings into at least three different regions of the tobacco field at pre-determined intervals of at least one week, at least two weeks, at least three weeks, at least four weeks or more. Preferably, the method of the invention comprises transplanting tobacco seedlings into at least three different regions of the tobacco field at pre-determined intervals of at least about two weeks, more preferably at pre-determined intervals of at least about four weeks. Preferably, the method of the invention comprises transplanting tobacco seedlings into at least three different regions of the tobacco field at pre-determined intervals of less than about 20 weeks, more preferably less at pre-determined intervals of than about 15 weeks.

For example, the method of the invention may comprise successively transplanting tobacco seedlings into four different regions of the tobacco field at pre-determined intervals of about three months intervals during the twelve month period. Alternatively, the method of the invention may comprise successively transplanting tobacco seedlings into six different regions of the tobacco field at pre-determined intervals of about two months during the twelve month period. In yet further embodiments, the method of the invention may comprise successively transplanting tobacco seedlings into twelve different regions of the tobacco field at pre-determined intervals of about one month during the twelve month period.

The method of the invention may comprise successively transplanting tobacco seedlings into at least three different regions of the tobacco field at pre-determined intervals of the same or different length during the twelve month period. For example, where the method of the invention comprises successively transplanting tobacco seedlings into three different regions of a tobacco field during a twelve month period, the pre-determined interval between successively transplanting tobacco seedlings into the first and second regions of the tobacco field may be the same as or different to the pre-determined interval between successively transplanting tobacco seedlings into the second and third regions of the tobacco field.

The pre-determined intervals between successively transplanting tobacco seedlings into the at least three different regions of the tobacco field may be such that tobacco seedlings are transplanted into a single region of the tobacco field during harvesting of a single tobacco crop from another region of the tobacco field.

Alternatively, the pre-determined intervals between successively transplanting tobacco seedlings into the at least three different regions of the tobacco field may be such that tobacco seedlings are transplanted into a plurality of different regions of the tobacco field during harvesting of a single tobacco crop from another region of the tobacco field.

In other embodiments, the pre-determined intervals between successively transplanting tobacco seedlings into the at least three different regions of the tobacco field may be such that tobacco seedlings are transplanted into a single region of the tobacco field during harvesting of a plurality of tobacco crops from other regions of the tobacco field.

In yet further embodiments, the pre-determined intervals between successively transplanting tobacco seedlings into the at least three different regions of the tobacco field may be such that tobacco seedlings are transplanted into a plurality of different regions of the tobacco field during harvesting of a plurality of tobacco crops from other regions of the tobacco field.

In preferred embodiments of the method of the invention, the pre-determined intervals between successively transplanting tobacco seedlings into the at least three different regions of the tobacco field are such that hosts a tobacco crop at a specific stage of the tobacco crop cycle that is distinct from the stages of the tobacco crop cycle of tobacco crops hosted in the other regions of the tobacco field. This advantageously reduces or eliminates peaks and troughs in the usage of specific equipment, labour and other resources required during different stages of the tobacco crop cycle. This ensures that the overall resource requirements for the tobacco field are as constant as possible during the twelve month period. By ensuring optimal and continuous deployment of equipment, labour and other resources, such embodiments of the method of the invention shown allow investment in production factors or inputs to be advantageously minimised.

Through an appropriate selection of the number of different regions into which tobacco seedlings are successively transplanted and the pre-determined interval at which tobacco seedlings are successively transplanted into the different regions, tobacco may advantageously be grown in a tobacco field substantially continuously during a twelve month period in accordance with the method of the invention. For example, the method of the invention may comprise transplanting tobacco seedlings into a region of the tobacco field in every twelve week period of the twelve month period, in every ten week period of the twelve month period, in every eight week period of the twelve month period, or in every five week period of the twelve month period.

In some embodiments, the method of the invention may comprise transplanting tobacco seedlings into at least one fifth of the total area of the tobacco field in every twelve week period of the twelve month period. In some embodiments, the method of the invention may comprise transplanting tobacco seedlings into at least one tenth of the total area of the tobacco field in every six week period of the twelve month period.

As well as successively transplanting tobacco seedlings into at least three different regions of a tobacco field during a twelve month period, the method of the invention may comprise successively transplanting two tobacco crops into a region of the tobacco field during the twelve month period. In particular, the method of the invention may comprise transplanting a second tobacco crop into one or more regions of the tobacco field during the twelve month period after harvesting of a first tobacco crop from the one or more regions of the tobacco field. The second tobacco crop may be transplanted into the one or more regions of the tobacco field immediately after harvesting of a first tobacco crop from the one or more regions of the tobacco field. Alternatively, the second tobacco crop may be transplanted into the one or more regions of the tobacco field at a pre-determined interval after harvesting of a first tobacco crop from the one or more regions of the tobacco field.

Growing more one tobacco crop in a region of the tobacco field during the twelve month period in accordance with the method of the invention enables the tobacco yield per unit area of that region of the tobacco field to be advantageously increased by up to fifty percent or more compared to the tobacco yield per unit area obtained by conventional methods of growing tobacco. Depending upon the length of the pre-determined interval if any between harvesting of the first tobacco crop and transplanting of the second tobacco crop, up to 1.5 tobacco crops may be grown in the region of the tobacco field during the twelve month period.

The method of the invention comprises cultivating the tobacco seedlings in each of the at least three different regions of the tobacco field. It will be appreciated that cultivation of tobacco seedlings in accordance with the method of the invention may comprise the use of any suitable known agronomic practices based on the variety of tobacco grown and the geographic location of the tobacco field. The method of the invention also comprises harvesting a tobacco crop from each of the at least three different regions of the tobacco field. In certain embodiments, the method of the invention may comprise harvesting a tobacco crop from each of the at least three different regions of the tobacco field by picking individual tobacco leaves from mature tobacco plants in each region as they ripen. In other embodiments, the method of the invention may comprise harvesting a tobacco crop from each of the at least three different regions of the tobacco field by harvesting entire mature tobacco plants in each region of the tobacco field.

Preferably, the method further comprises curing the tobacco crop harvested from each of the at least three different regions of the tobacco field. Depending upon the variety of tobacco grown, the method of the invention may further comprise air-curing, fire-curing, flue-curing or sun-curing the tobacco crop harvested from each of the at least three different regions of the tobacco field.

The method of the invention finds particular application in tropical and sub-tropical geographic areas. Temperature variations throughout the year in tropical and sub-tropical geographic areas are generally sufficiently small to allow multiple tobacco crops to be grown in a tobacco field during a twelve month period provided that suitable soil conditions and sufficient water are available. Suitable tropical and sub-tropical geographic areas include, but are not limited to, regions of Brazil.

The method of the invention may be used to grow different types of tobacco including, but not limited to, Virginia, Burley, and Oriental and other traditional tobacco types. The method of the invention may be used to grow a single type of tobacco in a tobacco field during a twelve month period. Alternatively, the method of the invention may be used to grow two or more different types of tobacco in a tobacco field during a twelve month period.

The method of the invention may comprise rotating transplanting of tobacco seedlings in one or more regions of tobacco field with the planting of other non-tobacco crops after completion of each or a number of tobacco crop cycles. In such embodiments of the invention, the transplanting of tobacco seedlings may be rotated with the planting of any suitable non-tobacco crops based on the geographic location of the tobacco field.

By including crop rotation in the method of the invention the total area of the tobacco field may become a patchwork of different plant species at different growing stages. This advantageously allows pest control efficiency to be maximised through the breaking of crop-specific pest-reproduction cycles. It also advantageously ensures that chemicals in the soil are maintained at optimal levels due to differential uptake of soil chemicals by different plant species.

The invention will be further described, by way of example only, with reference to the accompanying drawings in which:

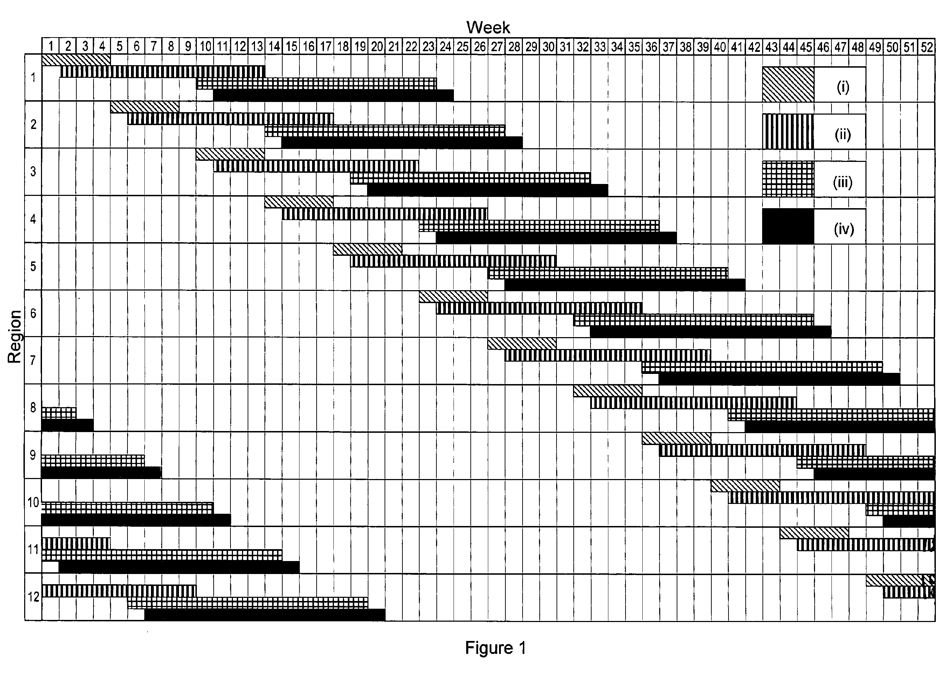

Figure 1 shows a schedule for a method of growing twelve tobacco crops in a tobacco field during a twelve month period according to an embodiment of the invention.

The method of the invention shown in Figure 1 comprises successively (i) transplanting tobacco seedlings into twelve different regions of the tobacco field at pre-determined intervals during a twelve month period; (ii) cultivating the tobacco seedlings in each of the twelve different regions of the tobacco field; (iii) harvesting a tobacco crop from each of the twelve different regions of the tobacco field; and (iv) curing the tobacco crop harvested from each of the twelve different regions of the tobacco field.

For each of the twelve different regions of the tobacco field the step of (i) transplanting tobacco seedlings into the region is completed during the twelve month period. However, as shown in Figure 1, the lengths of the various stages of the tobacco crop cycle are such that the steps of (iii) harvesting and (iv) curing the tobacco crops from the eight, ninth and tenth regions of the tobacco field and (ii) cultivating, (iii) harvesting and (iv) curing the tobacco crops from the eleventh and twelfth regions of the tobacco field are completed after the end of the twelve month period; as shown in grey in Figure 1, these steps are completed during weeks one to twenty of a subsequent twelve month period.

In the method of the invention shown in Figure 1, tobacco seedlings are successively transplanted into the twelve different areas of a tobacco field at four weeks intervals during the twelve month period. This results in (iii) harvesting of successive tobacco crops from the twelve different regions of the tobacco field, and hence (iv) curing of the successive tobacco crops harvested from the twelve different regions of the tobacco crops, also being staggered by four weeks.

The four week interval between (i) transplanting tobacco seedlings into the twelve different regions of the tobacco field is such that tobacco seedlings are transplanted into a region of the tobacco field during (iii) harvesting of a tobacco crop from another region of the tobacco field. For example, as shown in Figure 1, the method comprises (i) transplanting tobacco seedlings into the third, fourth, fifth and sixth regions of the tobacco field during (iii) harvesting of a tobacco crop from the first region of the tobacco field.

In the embodiment of the method of the invention illustrated in Figure 1 each of the twelve different regions of the tobacco field hosts a tobacco crop at a specific growing stage that is distinct from the growing stages of the tobacco crops hosted in the other regions of the tobacco field. This advantageously reduces or eliminates peaks and troughs in the usage of specific equipment, labour and other resources required during different stages of the tobacco crop cycle. This ensures that the overall resource requirements for the tobacco field are as constant as possible during the twelve month period. By ensuring optimal and continuous deployment of equipment, labour and other resources, the embodiment of the method of the invention shown in Figure 1 allows investment in factors of production to be advantageously minimised.

In the embodiment of the method of the invention described above, tobacco seedlings are successively transplanted into twelve different regions of a tobacco field during a twelve month period. However, it will be appreciated that methods of growing tobacco according to the invention may comprise successively transplanting tobacco seedlings into more than twelve different regions of a tobacco field during a twelve month period. It will also be appreciated that methods of growing tobacco according to the invention may comprise successively transplanting tobacco seedlings into fewer than twelve different regions of a tobacco field during a twelve month period provided that tobacco seedlings are transplanted into at least three different regions of the tobacco filed during the twelve month period.

In the embodiment of the method of the invention described above, tobacco seedlings are successively transplanted into the twelve different regions of the tobacco field at four week intervals. However, it will be appreciated that methods of growing tobacco according to the invention may comprise successively transplanting tobacco seedlings into at least three different regions of a tobacco filed at longer or shorter predetermined intervals provided that the interval between successively transplanting tobacco seedlings into the at least three different regions of the tobacco field is such that tobacco seedlings are transplanted into a region of the tobacco field during harvesting of a tobacco crop from another region of the tobacco field.

## Claims

1. A method of growing tobacco in a tobacco field during a twelve month period, the method comprising:
successively transplanting tobacco seedlings into at least three different regions of the tobacco field at pre-determined intervals during the twelve month period;
cultivating the tobacco seedlings in each of the at least three different regions of the tobacco field; and
harvesting a tobacco crop from each of the at least three different regions of the tobacco field,
wherein the pre-determined intervals between successively transplanting tobacco seedlings into the at least three different regions of the tobacco field are such that tobacco seedlings are transplanted into a region of the tobacco field during harvesting of a tobacco crop from another region of the tobacco field.

2. A method according to claim 1 further comprising curing the tobacco crop harvested from each of the at least three different regions of the tobacco field.

3. A method of growing tobacco according to claim 1 or 2 comprising transplanting tobacco seedlings into at least three different regions of the tobacco field at pre-determined intervals of at least two weeks.

4. A method of growing tobacco according to claim 1, 2 or 3 comprising transplanting tobacco seedlings into at least three different regions of the tobacco field at pre-determined intervals of less than 20 weeks.

5. A method according to any of claims 1 to 4 wherein the method comprises transplanting tobacco seedlings into at least one region of the tobacco field in every twelve week period of the twelve month period.

6. A method of growing tobacco according to any preceding claim comprising transplanting tobacco seedlings into at least one region of the tobacco field in every eight week period of the twelve month period.

7. A method of growing tobacco according to any preceding claim comprising transplanting a second tobacco crop into one or more regions of the tobacco field during the twelve month period after harvesting of a first tobacco crop from the one or more regions of the tobacco field.

8. A method of growing tobacco according to any preceding claim comprising transplanting tobacco seedlings into at least one fifth of the total area of the tobacco field in every twelve week period of the twelve month period.

9. A method of growing tobacco according to claim 8 comprising transplanting tobacco seedlings into at least one tenth of the total area of the tobacco field in every six week period of the twelve month period.

10. A method of growing tobacco according to any preceding claim wherein the tobacco field is at least 250 hectares.

11. A method of growing tobacco according to claim 10 wherein the tobacco field is at least 500 hectares.

12. A method according to any preceding claim wherein the tobacco is selected from the group consisting of Virginia, Burley and Oriental.
